# EUROPEAN PATENT APPLICATION

(11) **EP 4 427 584 A1**
(43) Date of publication of application: **11.09.2024**
(21) Application number: 23813254.2
(22) Date of filing: 12.05.2023
(51) Int. Cl.: A01G 31/00

(54) **WHOLE PLANT CULTIVATION DEVICE AND CULTIVATION METHOD, AND METHOD FOR MANUFACTURING CULTIVATION DEVICE**

(30) Priority: 08.07.2022 JP 2022110478
(71) Applicant: GCJ Co., Ltd., Osaka-shi, Osaka 5360015 (JP)
(72) Inventor: TANAKA, Kunisuke, Osaka-shi, Osaka 5360015 (JP); KINOSHITA, Akira, Osaka-shi, Osaka 5360015 (JP)
(74) Representative: Hoffmann Eitle
(86) International application number: PCT/JP2023/017980
(87) International publication number: WO 2024/009608

(57) **Abstract**

The present invention provides culture apparatus for a plant whole body and a method for culture of such a plant whole body, which allow liquid-phase roots and vapor-phase roots to separately appear in the root system without using soil. More specifically, a plant whole body is cultured by using culture apparatus for a plant whole body, which comprises a container constructed with a structure showing capillary force; and a basin holding liquid.

## Description

### [Technical Field]

The present invention provides culture apparatus and a culture method of plant whole body, which require no soil, and a manufacturing method of the culture apparatus.

### [Background]

In the chemical industries, various chemicals such as strong acids and strong alkalis are used to synthesize, decompose, and separate target substances, so a large amount of hazardous waste is discharged. Therefore, in recent years, there has been a demand for green chemistry that does not emit any harmful waste.

The majority of organic matters can be synthesized from inorganic raw materials in the body of plants through complex chemical reactions, and the chemical reactions performed by plants are the ultimate green chemistry, because they do not emit any harmful waste.

Conventional plant culture technology is only possible through "agriculture" = "soil culture". However, in agriculture, there are many constraints to ensure the science of culture, such as seasons, climate changes, locations, soil conditions, and fertilization managements, and it is difficult to apply experimental results scientifically in practice. Therefore, in order to develop green chemistry that requires plants, a culture technique free from the above constraints is required.

Below, the history from soil-restricted plant culture to modern plant factories will be explained.

### (1) Beginning of mankind's Plant culture: soil culture (about 10,000 years ago)

The history of mankind's "Plant culture" is said to be about 10,000 years old. It was to run fields and paddy fields by irrigation and fertilization in suitable places including climates for culturing the desired plants. Planting and culture of woody plants are basically the same. Even today, the majority (almost all) of "edible plants" rely on soil culture, and due to the global soil exodus and the climate change, the production situation has become unstable, and food production has become a concern.

### (2) Beginning of Land-free culture: Pot culture (from 200 years ago)

Some have also developed a "container culture method (pot culture/container culture)" freed from the land. It is for purposes such as transporting living plants far away, observing them up close, and developing culture techniques. It is a "farmland & land-free culture" where the culture of plants is freed from the restrictions of the place.

Most of the production and distribution of plant seedlings and saplings are "Pot culture", and they are also distributed as they are for ornamental purposes. Recently, it is also used for the purpose of raising the sugar content of fruits and producing seasonally.

### (3) Soil-free culture: hydroponics (from 100 years ago)

On the one hand, some horticultural products and vegetables have been found that they can be grown in water or in a nutrient solution containing water and nutrition, as a result, the possibility of developing "soil-free" plant culture technology comes up. Plants can be cultured cleanly indoors, on ships, in hot and cold climates, and the scope of human activity has expanded.

Hydroponics began in Japan at the end of World War II and after the war when the US military built a plant factory that included a water flowing system to supply fresh vegetables to soldiers in remote areas. By introducing the water flow device, it became possible to avoid root respiratory failure due to the decrease in "dissolved oxygen" that occurs in stagnant water. After that, hydroponic plant culture factories that mimicked this flowing-water vegetable culture apparatus were widespread. However, at this time, plants being capable of hydroponics were limited to a small number of plant species such as leafy vegetables, tomatoes, and cucumber.

### (4) New beginning with No soil culture: ceramic culture (from 25 years ago)

The present inventors have developed a ceramic culture, a kind of water culture wherein roots can breathe even in stagnant water, and have made possible the world's first "no soil-required plant culture" that completely eliminates the need for soil [Patent Document 1 and 2].

The ceramic culture developed by the present inventors does not require a large-scale water flow device, making it possible to grow vegetables indoors in a small scale and cleanly. According to this culture method, the plant roots come into contact with the inner walls of the special microporous ceramic utensils and absorb the water present in the micropores of the microporous ceramic utensils, making the root system compact (no need for traction roots).

Products using the above ceramic utensils in the no soil culture have already been sold under the trade names of "Ceraphyto, "CeramicNae", etc. Furthermore, a closed-type vegetable factory "OHABEBE FARM" and a rice culture apparatus "CeraFudo", which apply the aforementioned technology, are also in operation and they have been highly evaluated.

In addition, the product has been also installed on the space station "Kibo". For "Demonstration experiment of Space inflatable structure", an H-IIB rocket flew into space, which carried HTV-3 (Kounotori No. 3) loading a special ceramic-made seed germination experimental device for space culture that the inventors were involved in developing and manufacturing in order to investigate the possibility of culturing from seed germination in outer space [Non-Patent Document 1].

### (5) Copernican Revolution into No soil culture: Brand new ceramic culture (from the present to the future, and finally into space)

Since the ceramic culture technique developed by the present inventors lets roots to grow in crevices and tubes, there are physical limitations to culture of plants that require more water or have an enlarged root system. Therefore, the present inventors conducted further research and development in order to overcome the above constraints, and established a brand new method of ceramic culture that is useful for a wide variety of plants.

In the first place, plants do not require soil to grow, and as long as they have the means to absorb moisture and oxygen from the roots and support the plant whole body, plant culture is possible in any place, even in outer space. However since there was no such idea until now, no one could achieve the no soil culture method that can culture all kinds of plants, before the present inventors advocates so.

Just as Copernicus and Galileo advocated the "heliocentric theory" and continued to say "The earth still rotates", in this brand new ceramic culture, "The plants are still growing".

### [Related Art]

### [Patent Document]

[Patent Document 1] JP H10-150871 A
[Patent Document 2] WO 2003/042352 A

### [Non-patent Document]

[Non-patent Document 1] 53rd Space Sciences and Technology Conference, September 10, 2009, The Japan Society for Aeronautical and Space System 2108 (JSASS-2009-4343) "Ecological maintenance space construction by inflatable structure and its space demonstration experiment"

### [Summary of the Invention]

### [Problem to be solved by the Invention]

The current plant factories require large tracts of land, large facilities and equipment, and energy to operate the large facilities and equipment. Furthermore, the control systems for the supply of light, water and oxygen must be properly operated. In other words, in order to operate the current plant factory, it is required to have both high technical ability and abundant financial strength.

However, when the establishment of a plant factory is truly required, it should be established in a place where sufficient water supply cannot be expected, or a place where crops cannot be cultured immediately after a disaster. In that case, from an economic point of view, it is unlikely that the establishment of a current plant factory will become active on a narrow land even if water can be replenished or an area that will be reconstructed from disasters in the future.

Plants include (1) trunks, stems, branches, leaves, etc. which are present above ground in soil culture; (2) a root system which is present underground in soil culture; (3) flowers, seeds, fruits, etc.; (4) seeds; (5) scents and the like; and (6) products such as medicinal components. In this specification, for the sake of convenience, (1) the "subterranean stem" is excluded from the stem that constitutes the plant body, and (2) the "subterranean stem" is included in the root system.

In the plant whole body, a "stem" is an organ which acts as an axis of the plant body in vascular plants, supports leaves and fruits, transports moisture and nutrition from roots to leaves and fruits, and transports nutrition produced in leaves to roots. Edible or medicinal plants that store nutrition in their roots include, for example, sweet potato, Japanese yam, Japanese white radish, carrot, turnip, edible burdock, and medicinal ginseng.

In addition, a "subterranean stem" is one of the metamorphosis of stem that appeared underground in soil culture, and it has the function of supporting the plant whole body like the root, and some plants also have the function of storing nutrition in it. Edible or medicinal plants that store nutrition in subterranean stems include, for example, potato, Jerusalem artichoke, konjac, taro, threeleaf arrowhead, onion, ginger, lily bulb.

It is known that the root system of the plant whole body has a role to support the plant body, a role to absorb nutrition and moisture necessary for the growth of the plant whole body, and a role to storage carbohydrates such as starch produced by photosynthesis in the above ground part, plant growth regulators and synthesized various medicinal components. It is also known that, of the root system, mature thick roots play a major supporting role, and young roots and root hairs efficiently absorb water and nutrition from the soil due to increase of the surface area. Furthermore, it is known that the lack of oxygen causes root rot and the plant whole body withers.

However, regarding the role of the root system, the root system is hidden in the soil, so it cannot be visually confirmed directly, and even if the soil grains are removed, the distribution of various forms of roots in the soil cannot be determined. Also, even if the root system can be visually observed with hydroponics, since the entire root system is in flowing water, it is not possible to distinguish between a water-absorbing part and an oxygen-absorbing part. No detailed investigation has been carried out at present.

The present inventors focused on the function of, in particular, the root system in the plant whole body, based on the knowledge gained when developing the "ceramic culture", and continued further research. It was confirmed that in the first place, soil is not required for the growth of plants, and plant culture is possible anywhere as long as there is a means for absorbing moisture, nutrition and air containing oxygen from the roots, and a means of physically supporting the plant whole body.

More specifically, the part of the root that is in contact with the inner wall of the ceramic cylinder absorbed water, and the root hairs are abundant on the side that was not in contact. That is, in the root, there are a root part which grows toward a side where moisture is plenty, that is, a liquid phase, and absorbs mainly moisture and nutrition; and a root part which grows toward a vapor phase, and is presumed to mainly absorb oxygen from the air.

In the present invention, the root that mainly absorbs water and nutrition is called a "liquid-phase root", and the root that mainly absorbs oxygen is called a "vapor-phase root".

In conventional soil culture, ideally the soil grains form a structure of soil aggregates. There are interstices between soil grains or soil aggregates. Then, it is assumed that when an amount of water in the soil is large, the entire root system absorbs moisture and nutrition from the water absorbed by the soil grains or soil aggregates as well as the liquid phase present in the interstices, and when an amount of water in the soil is small, a part of the root is in contact with the surface of the soil grains likely in ceramic culture and absorbs water and nutrition as liquid-phase roots; and in the interstices between the soil grains or soil aggregates, the other part absorbs oxygen from the air as vapor phase roots. In other words, the root system of soil-cultured plants is considered to have vapor-phase roots and liquid-phase roots disorderly.

The present inventors speculates if the root system is separated into a site where liquid-phase roots appear and a site where vapor-phase roots appear so that in the respective sites, moisture and nutrition are absorbed from the liquid phase by the liquid-phase roots and oxygen in the air is absorbed from the vapor phase by the vapor-phase roots, even when the dissolved oxygen in the liquid phase is deficient, the presence of the vapor-phase root will prevent the root system of the plant whole body from becoming oxygen deficient.

Therefore, the present inventors aimed to develop culture apparatus for a plant whole body and a method for culture of such a plant whole body, which allow liquid-phase roots and vapor-phase roots to separately appear in the root system without using soil. In this context, "culture of the plant whole body" includes industrial culture of plants in order to utilize the plant whole body for purposes of acquisition of scent and the like; oxygen emission and CO₂ absorption; moderation of humidity and temperature of the surrounding environment, etc.

### [Means for solving the problem]

The culture apparatus for a plant whole body newly developed by the present inventors is characterized by setting a container constructed with a structure showing capillary force in a basin that holds stagnant water. The internal spacial area of the ceramic container is formed much larger than the aforementioned ceramic tube, and in the large spacial area, a large amount of root system grows without coming into contact with the inner wall of the ceramic container, and potatoes and root vegetables also grow.

As used herein, the capillary force refers to the ability to carry water upward against gravity, that is, the suction ability due to capillary action, the internal microstructure of the structure showing capillary force and the wettability of water to the material of the structure affect the capillary force.

The present invention adopts a ceramic container consisting of a structure showing capillary force similar to the above ceramic tube, it uses stagnant water in a basin to supply moisture to a plant whole body, and moisture in capillaries is used to control humidity in the interior spacial area.

When the culture apparatus and the culture method according to the present invention are used, a part in the root system which are present in a liquid phase grows as a liquid-phase root absorbing moisture and nutrition from the liquid phase, and a parts in the root system which is present in a vapor phase grows as a vapor-phase root absorbing oxygen from the vapor phase. Consequently, unlike the and soil culture or conventional hydroponics, it becomes possible that the liquid-phase roots and the vapor-phase roots are respectively aggregated and they can be cultured separately in the respective appropriate phase, and therefore, even if dissolved oxygen in the stagnant water is deficient and it becomes unable to absorb oxygen from the liquid-phase root, the vapor-phase root will continue to absorb oxygen, so the root system of the plant whole body never become oxygen-deficient.

Further, since the culture apparatus according to the present invention has a support means for the plant whole body, and supporting roots required in soil culture is not essential, the total amount of the liquid-phase roots and vapor-phase roots becomes greatly increase.

Therefore, the culture apparatus for a plant whole body according to the present invention can be applied to various primordia without being limited to the type, size, or morphology of a plant. The morphology of a plant includes any morphology of a plant such as a morphology with root portions and a morphology without root portions but having reproductive potential (e.g., seed, bulb, subterranean stem, terrestrial stem, buds, adventitious buds, axillary buds, anther, filament, ear, leaf, cuttings, small seedlings, large seedlings, scale, ovary, ovule, embryo, pollen, adventitious embryo, adventitious roots, plant tissue or plant cell of cultured plant and the like).

The present invention provides, in the first aspect, culture apparatus for a plant whole body, which comprises a container constructed with a structure showing capillary force; and a basin holding liquid.

In the culture apparatus according to the present invention, the container constructed with a structure showing capillary force consists of a cylinder part and a closure part, wherein a top edge of the cylinder part is closed with the closure part, wherein the closure part is an upper surface part integrated with the cylinder part or a lid removably formed from the top edge of the cylinder part, wherein a through hole is formed in the closure part, and wherein a bottom edge of the cylinder part has an open form or a closed form.

The shape of the cylinder part, is, in horizontal cross section, a standard shape selected from the group consisting of substantially circular, substantially elliptical, substantially triangular, substantially quadrangular, substantially pentagonal, substantially hexagonal, substantially heptagonal and substantially octagonal, or a non-standard shape, and in vertical cross section, a standard shape selected from the group consisting of a substantially square, substantially rectangular and substantially trapezoidal shape, or a non-standard shape.

The container with a microporous body is a fired body made of a non-metal inorganic solid material, and at least the cylinder part contains continuous pores that are voids, and the void rate of the entire fired body is 10 to 80% (vol/vol), the average pore size of the void is 3 pm or less, and the voids with a pore size of 3 pm or less account for 70% or more of the total voids in volume ratio.

The present invention provides, in the second aspect, a culture method for a plant whole body, which uses the culture apparatus according to the present invention, the method comprises at least
a step of forming a spacial area capable of accommodating a root system of the plant whole body with the inner surface of the basin and the interior wall of the container by setting the container constructed with a structure showing capillary force within the basin holding liquid, so that its open or closed bottom edge is in contact with the inner surface of the basin;
a step of introducing a liquid into the basin before or after the step of forming a spacial area;
a step of growing root parts that absorb moisture and nutrition from the liquid phase in the liquid held within the basin; and
a step of growing root parts that absorb oxygen from the vapor phase in moisture and oxygen present inside the spacial area.

The liquid held in the basin is water or a nutrient solution containing nutrition required for growing the plant whole body to be cultured. The liquid held in the basin can be stagnant water. The nutrition required for the growth of the plant is an essential macroelement selected from the group consisting of nitrogen, phosphate, potassium, calcium, magnesium and sulfur; an essential trace element selected from the group consisting of iron, manganese, boron, zinc, molybdenum, copper, chlorine, nickel; or an useful element selected from the group consisting of silicon, sodium, cobalt, etc.

The present invention provides, in the third aspect, a method manufacturing culture apparatus for a plant whole body, which comprises a container constructed with a structure showing capillary force; and a basin holding liquid, wherein the container constructed with a structure showing capillary force consists of a cylinder part and a closure part, wherein a top edge of the cylinder part is closed with a closure part, wherein the closure part is an upper surface part integrated with the cylinder part or a lid removably formed from a top edge of the cylinder part, wherein a through hole is formed in the closure part, and wherein a bottom edge of the cylinder part has an open form or a closed form,
the method comprises at least
a step of forming a spacial area capable of encompassing the root system of the plant whole body with the inner surface of the basin and the interior wall of the container by setting the container constructed with a structure showing capillary force within the basin holding liquid so that its open or closed bottom edge is in contact with the inner surface of the basin.

In the present invention, the structure showing capillary force is made of organic solid material, non-metal inorganic solid material, pulp, paper, woven fabric , non-woven fabric.

As one embodiment, the structure showing capillary force is a fired body made of a non-metal inorganic solid material, and it is characterized in that at least the cylinder part contains continuous pores that are voids, and the void rate of the entire fired body is 10 to 80% (vol/vol), the average pore size of the void is 3 µm or less, and the voids with a pore size of 3 µm or less account for 70% or more of the total voids in volume ratio.

### [Effects of the Invention]

When the culture apparatus for plant whole body and the culture method according to the present invention are used, since soil is not required for culturing a plant whole body, anybody can operate a plant factory anywhere at a low cost without requiring vast land, large facilities and apparatus, and further energy to operate such a large facilities and apparatus.

In soil culture, plants are bound to a specific location, and further, since after harvesting, it is necessary to remove the soil attached to the root system, which takes time and effort before shipping.

On the other hand, since the restraint by the soil and the influence of the impurities from the soil are removed according to the present invention, it becomes possible that the plant whole body is industrially produced, and then the target substance is harvested using its chemosynthetic power to activate the development of technology, and that nutrition necessary for synthesizing the target substance is appropriately supplied to the plant, and the absorption from the roots is directly and efficiently performed in order to efficiently synthesize the target component.

In short, the soil-free plant culture technology by the present invention is the entrance and foundation technology of the ultimate green chemistry.

### [Brief Description of the Drawings]

[Figure 1] A schematic diagram of the culture apparatus according to the present invention.
[Figure 2] Front and sectional views of a container constituting the culture apparatus of the present invention: (a) an integrally molded type; (b-1) a cylinder part-lid separated type; (b-2) a cylinder part-lid separate type with the lid being a two-piece type.
[Figure 3] Photographs of several specific examples of containers that constitute the culture apparatus of the present invention.
[Figure 4] An electron micrograph of a cross section of a fired body of a specific example of a container constituting the culture apparatus of the present invention.
[Figure 5] Comparison of trends between Japanese red pine grown using the culture apparatus and culture method of the present invention (right); and Japanese red pine grown without those things (left).
[Figure 6] Photographs showing changes in the state of turnip grown using the culture apparatus and culture method of the present invention.
[Figure 7] Photographs showing changes in the state of potato grown using the culture apparatus and culture method of the present invention.
[Figure 8] Photographs showing changes in the state of cabbage grown using the culture apparatus and culture method of the present invention.
[Figure 9] Photographs showing changes in the state of coffee tree A grown using the culture apparatus and culture method of the present invention.
[Figure 10] Photographs showing changes in the state of coffee tree B grown using the culture apparatus and culture method of the present invention.
[Figure 11] Photographs showing changes in the state of Japanese red pine grown using the culture apparatus and culture method of the present invention.
[Figure 12] Photographs showing changes in the state of tea tree grown using the culture apparatus and culture method of the present invention.
[Figure 13] Photograph showing the vapor-phase roots and liquid-phase roots of the respective plants grown using the culture apparatus and culture method of the present invention.

### [Mode for Carrying Out the Invention]

### 1. Plants to which the present invention can be applied

The culture method for a plant whole body according to the present invention can be applied to any plant, for example, grains such as rice, corn, wheat, soybean; craft plants such as cotton; recreational plants such as tobacco, tea tree; leafy vegetables such as lettuce, cabbage, broccoli, basil, Japanese ginger; root vegetables such as sweet potato, potato, carrot, taro, ginger, onion, Japanese white radish, turnip; fruits vegetables such as cucumber, melon, tomato, strawberry; fruit trees such as grape, satsuma mandarin orange; medicinal plants such as panax carrot, amur cork tree; small to large trees such as rose, thicket camellia, camphor tree, lacquer tree, Japanese cypress, Japanese cedar.

### 2. Advantages of the present invention

When the methods for manufacturing and culturing a plant whole body according to the present invention is used, since there is no need for soil, so anyone can culture desired plants anytime, anywhere without any location restrictions. In addition, since the root system is not hidden in soil, it is possible to directly observe the functions of a root system, especially root hairs, which will further advance the study of plant ecology. Furthermore, since plants are grown by consistently using the "same manufacturing method" from research and development to commodification and commercialization (regional implementation, social implementation), the time period until implementation and industrialization can be shortened, it is possible to easily collaborate with all cutting-edge technologies (not only IT, and also opttechnology, nanotechnology, gene editing technology, etc.), plants can be transferred, and scientific approaches for identity, homogeneity, cleanliness, reproducibility, etc. can be adopted, which leads to new technological development.

Therefore, based on the present invention, a brand new conceptual "PLANT FACTORY" can be launched, and it becomes a driving force to make inventions for realizing an installation of a plant factory, as long as there is enough light for photosynthesis, not only in dry areas and disaster-stricken areas where an abundant supply of water cannot be expected, and without limiting to the ground, in space such as vehicles, freight cars, ships, and aircraft, and even in outer space, such as space stations and other planets.

### 3. Detail of the present invention

### (1) Culture apparatus for a plant whole body

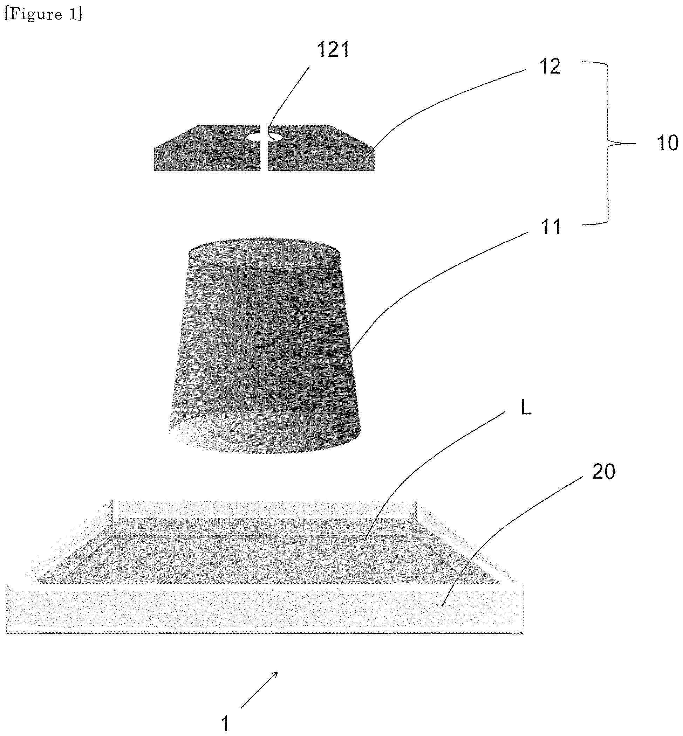

Culture apparatus for plant whole body 1 according to the present invention comprises container 10 consisting of a structure showing capillary force (hereinafter, also referred as "capillary force structure"); and basin 20 holding liquid L (Figure 1).

The container constructed with a capillary force structure 10 consists of cylinder part 11 and closure part 12. Top edge 111 of the cylinder part is closed with a closure part, wherein the closure part is upper surface part 12a which is integrally formed with the cylinder part or the closure part is lid 12b removably formed from the top edge of the cylinder part, and through hole 121 is formed in closure part 12. On the other hand, bottom edge 112 of the cylinder part has an open form or a closed form.

The shape and size for cylinder part 11 is appropriately determined based on the shape and size of the plant to be grown; and the outer diameter of the bottom edge is appropriately determined based on the desired yield per unit area and it depends on a so-called "intrarow spacing".

The shape of the cylinder part 11 is not specifically limited as long as it can support the plant whole body to be cultured, and may be a regular shape such as approximately circular, approximately oval, or approximately triangular, approximately quadrangular, approximately pentagonal, or approximately hexagonal in the cross section. However, it may have an atypical shape other than the above shapes. Further, in the longitudinal section, it may be approximately square, approximately rectangular, or approximately trapezoidal, and from the viewpoint of stability, a generally trapezoidal shape in which the upper base is shorter than the lower base is preferred.

The inner diameter and height of cylinder part 11 depend on the plant whole body to be cultured, but it is not limited as long as the cylinder 11 have a spacial area that can accommodate root systems and grown underground storage organs such as storage roots (e.g., sweet potato, Japanese yam, Japanese white radish, turnip, carrot, edible burdock, ginseng), subterranean stems (e.g., potato, taro, onion, garlic, turmeric), etc. For example, the inner diameter of the top edge is 3 to 25 cm, the inner diameter of the bottom edge is 6 to 30 cm, and the height is 5 to 25 cm.

With respect to the inner diameter and height of the cylinder part 11, for example, when harvesting Japanese white radish, it may be formed so that the cylinder part vertically elongated, as the inner diameter of the bottom edge being 10 cm and the height being 30 cm; when harvesting potatoes, it may be formed so that the cylinder part horizontally elongated, as the inner diameter of the bottom edge being 25 cm and the height being 20 cm. In addition, when harvesting large fruits such as melons or watermelons, a much larger cylinder part may be formed.

Furthermore, the weight of cylinder part 11 is, for example, 30 to 5,000 g, excluding a weight of a removable lid as described below.

When the closure part 12 is an upper surface part 12a integrally molded with the cylinder part 11, its shape and dimensions are defined by the top edge 111 of the cylinder part.

When the closure part 12 is a lid 12b removably formed from the top edge 111 of the cylinder part 11, its shape and dimensions are not limited as long as it can be stably set on the top edge of the cylinder part 11. It is necessary to have a thickness and weight that can support the plant whole body to be cultured without falling over, for example, a thickness of 0.5 to 3 cm and a weight of 30 to 1,500 g. It should also be taken into consideration that there is friction such that the top edge of the cylinder part and the lid do not easily slip off.

The through hole 121 has roles not only to let the terrestrial part of the plant whole body pass through in order to support the plant whole body, but also to capture light.

Although the position of the through hole 121 is not limited, it is preferable that the through hole 121 is located on the central axis of the container 10.

The shape of the through hole 121 is not limited, and the pore size may be large enough to accommodate the trunk or stem of the plant whole body to be cultured, for example, 1 to 10 cm.

When the present invention is applied to, for example, a ginger, the pore size can be set to 2 cm, and when applied to a Japanese cypress, the pore size can be molded to 10 cm.

It is preferable that a container constructed with a capillary force structure 10 is formed to be separable so that the through hole 121 can be divided. It is preferable that the closure part is a lid 12b formed to be removable from the top edge of the cylinder part, and is divided so that the through hole is divided.

When the closure part 12 is formed to be removable from the top edge 111 of the cylinder part, it is preferable that at least the lid 12b is formed to be separable, and more preferable that both the cylinder part 11 and the lid 12b are separable.

As described above, if a container constructed with a capillary force structure 10 is formed to be separable, it is easy to take in and out the plant whole body to be cultured, and especially when a root system becomes enlarge, it is desirable because observation and recovery of the root system of the plant whole body from the container constructed with a capillary force structure is easy.

In the culture apparatus, at least cylinder part 11 of container 10 is composed of a capillary force structure. The material of the capillary force structure can be manufactured from organic solid material, non-metal inorganic solid material, pulp, paper, woven fabric, non-woven fabric, etc.

As one specific embodiment of the culture apparatus, the container 10 constructed with a capillary force structure is a fired body of non-metal inorganic solid materials, and at least the cylinder part 11 includes continuous pores that are voids. It may be a fired body in which the average pore size of the voids is 3 µm or less, the voids with a pore size of 3 pm or less account for 70% or more of the total void volume, and the void rate is 10 to 80% (vol/vol) of the entire fired body.

The outer surface of the container constructed with a capillary force structure 10 may be coated with a means for preventing moisture present in the void from evaporating to the outside. The means for preventing the moisture from evaporating to the outside is, for example, a resin coating, a resin film, or a surface coating with a glaze.

The container constructed with a capillary force structure 10 has a function of stabilizing the temperature and humidity inside the container. The temperature is a temperature appropriate for the plant to be grown, and is regulated externally by nature or by a temperature control device. There is no need to attach a temperature control device to the culture apparatus according to the present invention. Further, the humidity is adjusted within the range of 20 to 100% within the temperature range when growing plants.

A container showing such a function has a water absorption capacity capable of retaining water, for example, at 20°C, 0.005 to 500 times, preferably 0.01 to 100 times, more preferably 0.025 to 50 times, most preferably 0.05 to 5 times with respect to the amount per unit weight of the container material (weight/weight). The container material is not particularly limited as long as a microporous body having, for example, a communicating hole with a void diameter of 0.02 to 900 pm, preferably 0.05 to 80 µm, more preferably 0.1 to 9 pm, and most preferably 0.2 to 5 pm, at a void rate (volume/volume) of 0.05 to 1, preferably 0.2 to 0.4 to the microporous body.

In this way, by adjusting the void diameter and void rate in the microporous body, even if the culture medium is contaminated with viruses, bacteria, filamentous fungi, algae, protozoa, etc., they cannot reach the plant whole body to be cultured, or at least take a long time according to the filtering effect of the microporous body, during which time the plant whole body can be transferred to another culture apparatus to prevent contamination itself.

In addition, the container constructed with a capillary force structure 10 may be any material having the above-mentioned characteristics, and is preferably made of materials that are resistant to various culture conditions or medium conditions such as sterilizing at high temperature and high pressure in an autoclave, or exposing to strong alkaline, strong acidic, high temperature, low temperature, high salt concentration, applying pressure, reduced pressure, organic solvents, radiation, or gravity, and the like. Examples include, for example, porous bodies obtained by kneading, molding, and firing non-metal inorganic solid materials such as No. 10 soil, porcelain No. 2 soil (Shiroyama Cerapot Co., Ltd.), Murakami clay (Niigata) and Mikawa clay (Marushun Ceramic Co., Ltd.), and materials made of open-cell plastic foam materials such as polyvinyl alcohol foam, polyurethane foam, polystyrene foam, vinyl chloride resin foam, polyethylene foam, polypropylene foam, phenol resin foam, and urea resin foam. In particular, when a non-metal inorganic solid material is made into a porous material that is microporous and easily absorbs and releases water, it is preferably to add, for example, 50 to 60% by weight of petalite, alumina, etc., and to fire it. In general, the petalite is preferably those containing 76.81% by weight of SiO₂, 16.96% by weight of Al₂O₂, 4.03% by weight of LiO₂, 0.26% by weight of K₂O, and 1.94% by weight of unavoidable impurities. The non-metal inorganic solid material may contain powdered inorganic foam. Furthermore, it is desirable that the capillary force structure used in the culture apparatus according to the present invention is made of a material that does not substantially reduce its strength or change its shape even when it absorbs water. Non-metal pottery made of inorganic materials has a stable structure, and containers made of paper or cloth are also useful depending on the plant being grown.

Molding methods for non-metal inorganic solid materials include, for example, molding methods known in the art such as casting molding, extrusion molding, press molding, and potter's wheel molding, and especially from the view point of mass production and cost reduction, extrusion molding is preferred. Further, drying after molding can be performed using conventional methods and conditions known in the art. The subsequent firing of the molded body is not particularly limited as long as it is carried out under conditions and by a method that are normally carried out, but for example, oxidation firing or the like can be selected, because it is easy to obtain the desired void, and the firing temperature is 1000°C to 2000°C, preferably 1100°C to 1500°C, more preferably 1150°C to 1250°C, and most preferably 1200°C. If the firing temperature of the non-metal inorganic solid material is less than 1000°C, sulfur components tend to remain, while if it exceeds 2000°C, the desired water absorbency cannot be obtained.

On the other hand, methods for molding a microporous body made of open-cell plastic foam include, for example, methods such as melt foam molding, solid phase foam molding, and cast foam molding. The main steps in melt foam molding are melt kneading, unfoamed sheet molding, heat foaming or extrusion foaming, cooling, cutting, and processing. In solid phase foam molding, the polymer is foamed in a solid phase or near solid phase. In addition, in cast foam molding, liquid raw materials (monomers or oligomers) are cast and foamed while reacting in the atmosphere. Further, a blowing agent is generally used to foam open-cell plastic foam.

When the closure part 12 is formed to be removable from the top edge 111 of the cylinder part, the material and manufacturing method of the lid 12b are not limited, but preferably follow the container constructed with a capillary force structure 10, and they may be different.

The material of the basin 20 is not limited as long as it can receive liquid L. The inner diameter of the basin 20 may be 10 to 50 cm, as long as the open bottom edge 112 of the container constructed with a capillary force structure can be accommodated therein. Further, the depth may be 3 to 10 cm.

The liquid L may be water or a nutrient solution containing nutrition required for the growth of the plant whole body to be cultured in water. The liquid L may be stagnant water lacking dissolved oxygen, and therefore, the culture apparatus 1 does not require a water flow mechanism or an oxygen supply mechanism, but the addition of such mechanisms is not excluded. In addition, a water level control mechanism for maintaining a constant water level can be added.

The culture apparatus 1 may further include a protective film 30 to prevent the liquid L held in the basin from evaporating from the liquid surface outside the container. The protective film 30 may be a water-impermeable membrane or plate. Water-impermeable membranes or plates include, but are not limited to, oil membranes, food wrap films, plastic plates, and the like. Since the held liquid L may be stagnant water, a membrane or plate having a drop lid function is preferable, but when the liquid L is allowed to flow, it is not excluded that there is a space between the liquid surface and the membrane or plate.

The culture apparatus 1 according to the present invention may further include a support or sleeve 40 for supporting the plant body above the closure part 12 of the container constructed with a capillary force structure.

When culturing a plant whole body to be cultured in the form of a seed, bulb, or seed potato, the culture apparatus 1 may further include a mounting table 50 for the seed, bulb, or seed potato. The dimensions of the mounting table 50 should be such that the target seed, bulb, or seed potato can be put thereon, and the mounting table 50 can be accommodated inside the container 10. A time period during which a trunk, stem, branch, leaf, etc. appearing from the seed, bulb or seed potato is less than the height of the container 10, or in the case where culture of the plant whole body to be cultured is started from the form of small seedlings at a height less than the height of the container 10, it may further include a support 60 that guides the seedlings to grow towards the light from the through hole 121 formed in the closure part 12.

In order to avoid enlarged parts of the root system of the plant whole body to be cultured, such as storage root (sweet potato, Japanese yam, Japanese white radish, turnip, carrot, edible burdock, ginseng) and subterranean stem (potato, taro, onion, garlic, turmeric, etc.), etc. from coming into contact with the liquid L, a shelf 70 may be provided in which the enlarged part is put and the liquid-phase root is immersed in the liquid.

### (2) Method for culturing Plant whole body

The present invention provides, in the second aspect, a method for culturing a plant whole body using the culture apparatus 1 according to the present invention described above in the second aspect, and at least:
a step of forming a spacial area capable of accommodating a root system of the plant whole body with the inner surface of the basin and an inner surface of the container by setting a container constructed with a capillary force structure 10 in a basin 20 holding liquid L, so that its open bottom edge 112 is in contact with an inner surface of the basin 20;
a step of introducing liquid L in the basin 20 before or after the step of forming a spacial area;
a step of growing root parts that absorb moisture and nutrition from the liquid phase in the liquid L held in the basin 20; and
a step of growing root parts that absorb oxygen from the vapor phase in the moisture and oxygen present inside the spacial area.

The main aim of the present invention is to provide a culture method for a plant whole body wherein the container 10 is set within the basin 20 so that the open bottom edge 112 is in contact with the inner surface of the basin 20 to accommodate a root system of the plant whole body, in particular, an enlarged area, that is, storage roots, subterranean stems, and the like; and to create an environment suitable for growing a plant whole body.

In the present invention, "an environment suitable for growing a plant whole body" means a spacial area that does not require soil, maintains a humidity of 20 to 100% RH, and separately forms a region for "liquid-phase roots" mainly absorbing moisture and nutrition and a region for "vapor-phase roots" mainly absorbing oxygen in the roots of the plant whole body to be cultured. This spacial area contains moisture from the liquid held in the basin 20, and gas components such as oxygen, nitrogen, carbon dioxide. The gas components can be vented inside and outside the container via the through hole. In addition, the temperature within the spacial area only needs to be within the appropriate temperature range for the whole plant body to be cultured, and since the root system is isolated, albeit incompletely, from the outside air, there are no sudden temperature changes, making it especially suitable for culture. No special temperature control mechanism is required.

The moisture is supplied directly from the liquid L held in the basin 20 and/or is supplied from the liquid L that has been sucked up from the basin 20 by capillary action due to continuous pores, which are voids present in the inner wall of the container constructed with a capillary force structure 10.

In the container constructed with a capillary force structure 10, the liquid-phase root is immersed in the liquid L held in the basin 20, and the vapor-phase root is not in contact with the liquid L.

Unlike the ceramic culture method developed by the present inventors [Patent Documents 1 and 2], in the method for culturing plant whole body, any root does not require a contact with the inner surface of the container constructed with a capillary force structure 10 in order to grow. However, it is not excluded that the overgrown roots come into contact with the inner surface of container 10.

The liquid L held in the basin 20 is water or a nutrient solution containing nutrition required for growing the plant whole body to be cultured, and does not need to be in a fluid state, which is stagnant water lacking dissolved oxygen. Therefore, in the present invention, in order to replenish oxygen, there is no need for a water flow mechanism that flows liquid L or an oxygen replenishment mechanism that directly replenishes liquid L with oxygen. This is because the culture method according to the present invention sufficiently cultures the "vapor-phase root" which mainly absorbs oxygen.

The nutrition required for the growth of the plants is at least an essential macroelement such as nitrogen, phosphate, potassium, calcium, magnesium and sulfur, in addition to carbon, hydrogen and oxygen. Furthermore, it includes an essential trace element such as iron, manganese, boron, zinc, molybdenum, copper, chlorine, nickel; and an useful element such as silicon, sodium, and cobalt.

In the method for culturing a plant whole body according to the present invention, the culture of the plant whole body can be started from the form of seeds, bulbs or seed potatoes, which can be rooted and germinated in the culture apparatus according to the present invention. Alternatively, it can be started from the form of seedling.

### (3) Manufacturing method of culture apparatus for plant whole body

The present invention provides, in the third aspect, a manufacturing method of culture apparatus for plant whole body, comprising at least, a container constructed with a capillary force structure 10; and a basin holding liquid L, wherein
the container constructed with a capillary force structure 10 consists of a cylinder part 11 and a closure part 12, the top edge 111 of the cylinder part is closed by the closure part, the bottom edge has an open shape, and wherein the cylinder part 11 and the closure part 12 are integrally molded, or the closure part 12 is a lid 12b removably formed from the top edge of the cylinder part 11, and a through hole 121 is formed in the closure part,
   wherein
   the manufacturing method comprises at least
a step of forming a spacial area capable of accommodating a root system of the plant whole body with the inner surface of the basin and an inner surface of the container by setting a container constructed with a capillary force structure 10 in a basin 20 holding liquid L, so that its open bottom edge 112 is in contact with an inner surface of the basin 20.

In one embodiment of the manufacturing method of the present invention, the container constructed with a capillary force structure 10 is a fired body made of a non-metal inorganic solid material, and at least the cylinder part contains continuous pores that are voids, and the void rate of the entire fired body is 10 to 80% (vol/vol), the average pore size of the void is 3 pm or less, and the voids with a pore size of 3 µm or less account for 70% or more of the total voids in volume ratio.

### [Examples]

The content of the present invention will be explained in more detail by showing examples below, but these examples are for the purpose of showing some embodiments of the present invention and explaining the present invention, are not intended to limit the present invention. Variations of these embodiments will readily occur to those skilled in the art, and the scope of the present invention is defined by the claims appended below and variations thereof.

### Example 1 Comparison of culture apparatus

### (1) Culture apparatus

The Culture apparatus for plant whole body according to the present invention mainly includes a container constructed with a capillary force structure 10; and a basin 20 holding liquid L (Figure 1). Since the plant whole body growing method according to the present invention targets large plants and plants with enlarged root systems, container 10 supports the plants to be grown and accommodates the enlarged root systems. It is necessary to have a shape, size and weight that can be used. As such a container, from the viewpoint of supporting plants, a container having a shape that spreads from top to bottom, for example, a shape like a conventional flower pot turned upside down, is useful.

The material for basin 20 only needs to be able to accommodate liquid L, and its inner diameter is not particularly limited as long as the open bottom edge of container 10 described above can fit therein.

### (i) Shape and size of container

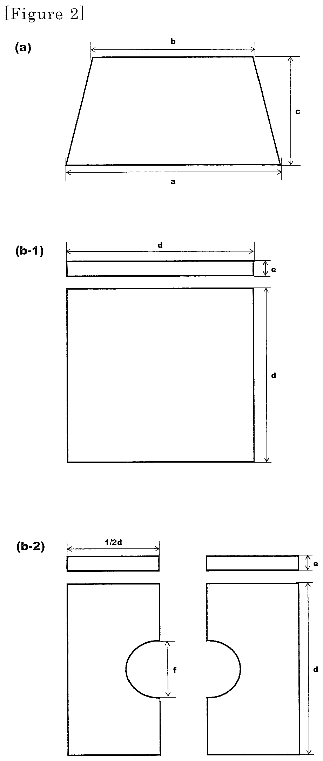

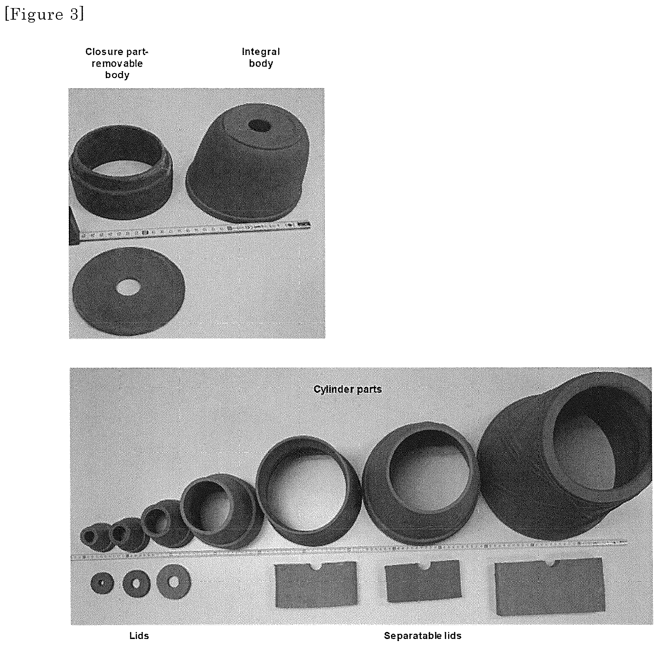

Regarding the shape and dimensions of container 10 in the present invention, a schematic diagram is shown in Figure 2 ((a) cylinder part, (b-1)), and photographs of some specific examples of the cylinder part and lid are shown in Figure 3.

### (ii) Material for container

### (a) Firing material

As a specific example of the firing material used in the present invention, Mikawa Pottery tile clay R2-6 was used. Table 1 shows the results of quantitative analysis of Mikawa Pottery tile clay R2-6 (conducted at Aichi Industrial Science and Technology Center).

**[Table 1]**

| Quantitative Analysis | | | | | | | (Content: %) | |
|---|---|---|---|---|---|---|---|---|
| SiO₂ | Al₂O₃ | Fe₂O₃ | TiO₂ | CaO | MgO | NazO | K₂O | LOI |
| 67.4 | 19.2 | 3.32 | 0.56 | 0.37 | 0.56 | 0.62 | 2.34 | 5.62 |

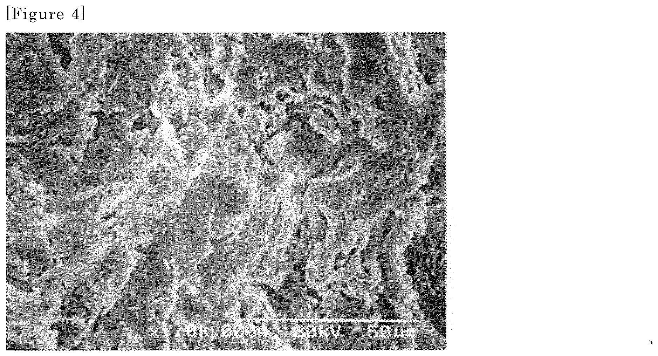

In Mikawayaki pottery (Marushun Ceramic Co., Ltd.), a microporous firing material (Clay R2-6 for pottery tiles) was molded using a regular mold for a flower pot, and it was fired in a gas kiln under the conditions: firing at 1090°C × 13 hours/cooling 30 hours in the gas kiln to manufacture a container made of the microporous fired body. The manufacturing conditions and sizes for manufactured flower pots were shown in Table 2. An electron micrograph of a cross section of this microporous fired body is shown in Figure 4.

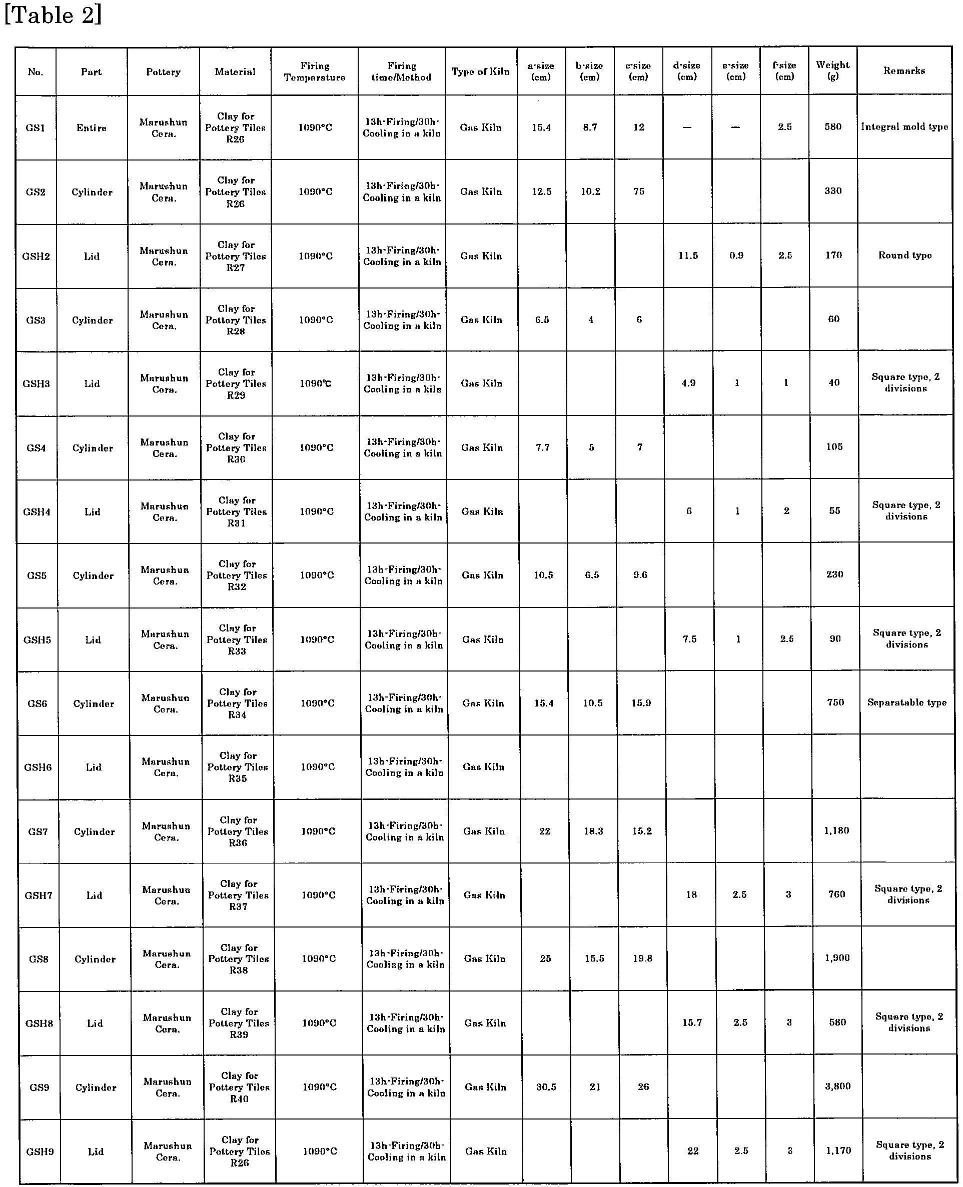

The void rate and void composition of a microporous fired bodies were calculated for each sample using the following procedure using a filtration type centrifugation method.
(1) A target microporous fired body sample is crushed to obtain a sample piece (5 to 8 mm square, approximately 0.5 g) that is sized to be caught in the middle of a microcentrifuge tube.
(2) The sample piece is dried to a constant weight, the dry weight Ws is measured, and the dry weight Wt of the microcentrifuge tube is measured.
(3) The sample piece is soaked in distilled water for 24 hours.
(4) The sample piece is taken out, the water adhering to the surface is lightly wiped off with tissue paper. The wet weight W of the small sample is measured. The dry weight Ws of the sample piece is subtracted from the wet weight W to determine the total water absorption weight WO (=W-Ws) of the sample piece.
(5) This sample piece is put into a microcentrifuge tube. At this time, make sure that the sample piece is caught in the middle of the tube and does not touch the bottom.
(6) After centrifuging at 3,000 rpm for 5 minutes, the sample piece is taken out, and the weight Wa of the microcentrifuge tube with water held at the bottom is measured. The weight Wt of the microcentrifuge tube is subtracted from this weight to determine the amount of water removed at 3,000 rpm W3000 (=Wa-Wt).
(7) The sample piece is put again into the microcentrifuge tube, which still retains the held water, and centrifuged at 5,500 rpm for 5 minutes. After that, the sample piece is taken out, and the weight Wb of the microcentrifuge tube with water held at the bottom is measured. The weight Wa of the microcentrifuge tube with water held at the bottom is subtracted from this weight to determine the amount of water removed at 5,500 rpm W5500 (=Wb-Wa).
(8) The sample piece is put again into the microcentrifuge tube, which still retains the held water, and centrifuged at 8,000 rpm for 5 minutes. After that, the sample piece is taken out, and the weight We of the microcentrifuge tube with water held at the bottom is measured. The weight Wb of the microcentrifuge tube with water held at the bottom is subtracted from this weight to determine the amount of water removed at 8,000 rpm W8000 (=Wc-Wb).
(8) The sample piece is put again into the microcentrifuge tube, which still retains the held water, and centrifuged at 10,500 rpm for 5 minutes. After that, the sample piece is taken out, and the weight Wd of the microcentrifuge tube with water held at the bottom is measured. The weight Wc of the microcentrifuge tube with water held at the bottom is subtracted from this weight to determine the amount of water removed at 10,500 rpm W10500 (=Wd-Wc).
(9) Finally, the total weight of removed water is subtracted from the total water absorption weight WO to determine the remaining water weight Wr (=WO-Wa-Wb-Wc-Wd) that was not removed even by centrifugation at 10,500 rpm.
(10) The above measurements are performed on nine sample pieces, and the void rate and void composition of the target microporous fired body sample are calculated using the sum of each measurement value. Table 3 shows the results.

**[Table 3]**

| No. | Before cetrifugation | | | | After 3,000 rpm centrifugation | | After 5,500 rpm centrifugation | | After 8,000 rpm centrifugation | | After10,500 rpm centrifugation | | End of cetrifugation |
|---|---|---|---|---|---|---|---|---|---|---|---|---|---|
| | Weight of Dry Sample (Ws g) | Total Weight of Wet Sample (Wg) | Total Weight of Adsorbed Water (WO g) | Weight of Tube (Wt g) | Weight of Tube + Water (Wa g) | Weight of Removed Water (W3000 g) | Weight of Tube + Water (Wb g) | Weight of Removed Water (W5500 g) | Weight of Tube + Water (Wcg) | Weight of Removed Water (W8000 g) | Weight of Tube + Water (Wdg) | Weight of Removed Water (W105000 g) | Weight of Remaining Water (Wrg) |
| 1 | 0.4007 | 0.4540 | 0.0533 | 0.9369 | 0.9431 | 0.0062 | 0.9653 | 0.0222 | 0.9748 | 0.0095 | 0.9774 | 0.0026 | 0.0128 |
| 2 | 0.4488 | 0.5063 | 0.0575 | 0.9369 | 0.9399 | 0.0040 | 0.9633 | 0.0234 | 0.9750 | 0.0117 | 0.9784 | 0.0034 | 0.0150 |
| 3 | 0.4284 | 0.4830 | 0.0546 | 0.9301 | 0.9329 | 0.0028 | 0.9558 | 0.0229 | 0.9684 | 0.0126 | 0.9705 | 0.0021 | 0.0142 |
| 4 | 0.4650 | 0.5195 | 0.0565 | 0.9170 | 0.9196 | 0.0026 | 0.9466 | 0.0260 | 0.9540 | 0.0084 | 0.9576 | 0.0036 | 0.0159 |
| 5 | 0.4531 | 0.5120 | 0.0589 | 0.9396 | 0.9466 | 0.0070 | 0.9732 | 0.0266 | 0.9823 | 0.0091 | 0.9843 | 0.0020 | 0.0142 |
| 6 | 0.6100 | 0.6865 | 0.0765 | 0.9465 | 0.9536 | 0.0071 | 0.9850 | 0.0314 | 0.9994 | 0.0144 | 1.0047 | 0.0053 | 0.0183 |
| 7 | 0.3917 | 0.4405 | 0.0488 | 0.9198 | 0.9224 | 0.0026 | 0.9425 | 0.0201 | 0.9535 | 0.0110 | 0.9552 | 0.0017 | 0.0134 |
| 8 | 0.4663 | 0.5258 | 0.0595 | 0.9296 | 0.9331 | 0.0035 | 0.9575 | 0.0244 | 0.9682 | 0.0107 | 0.9735 | 0.0053 | 0.0166 |
| 9 | 0.3265 | 0.3686 | 0.0421 | 0.9253 | 0.9295 | 0.0042 | 0.9492 | 0.0197 | 0.9544 | 0.0052 | 0.9573 | 0.0029 | 0.0101 |
| SUM | 3.9885 | 4.4962 | 0.5077 | 8.3807 | --- | 0.0400 | --- | 0.2167 | --- | 0.0926 | --- | 0.0289 | 0.1295 |

The void composition was calculated based on a correspondence table of centrifugal force and void diameter shown in Table 4, regarding the distance from the rotational center of the centrifugal device to the free water surface as a radius of rotation.

Here, the free water surface is regarded as the center between the upper end and the lower end of the microcentrifugal tube, and it was assumed that water comes out from pores having a void diameter of 3.5 µm or larger at 3,000 rpm, from pores having a void diameter of 1.0 µm or larger at 5,500 rpm, from pores having a void diameter of 0.5 pm or larger at 8,000 rpm, from pores having a void diameter of 0.3 pm or larger at 10,500 rpm, respectively to calculate the void composition. Table 5 summarizes the results.

Furthermore, the void rate for the entire fired body, which is this microporous fired body, was about 13%.

**[Table 4]**

| Rotational Number (rpm) | Rotational Radius (cm) | Centrifugal Force (g) | pF Value | Void diameter (µm) |
|---|---|---|---|---|
| 14,000 | 7.9719 | 17,500.00 | 4.24 | 0.1695 |
| 13,500 | 7.9719 | 16,272.32 | 4.21 | 0.1823 |
| 13,000 | 7.9719 | 15,089.29 | 4.18 | 0.1966 |
| 12,500 | 7.9719 | 13,950.89 | 4.14 | 0.2126 |
| 12,000 | 7.9719 | 12,857.14 | 4.11 | 0.2307 |
| 11,500 | 7.9719 | 11,808.04 | 4.07 | 0.2512 |
| 11,000 | 7.9719 | 10,803.57 | 4.03 | 0.2746 |
| 10,500 | 7.9719 | 9,843.75 | 3.99 | 0.3013 |
| 10,000 | 7.9719 | 8,928.57 | 3.95 | 0.3322 |
| 9,500 | 7.9719 | 8,058.04 | 3.91 | 0.3681 |
| 9,000 | 7.9719 | 7,232.14 | 3.86 | 0.4102 |
| 8,500 | 7.9719 | 6,450.89 | 3.81 | 0.4598 |
| 8,000 | 7.9719 | 5,714.29 | 3.76 | 0.5191 |
| 7,500 | 7.9719 | 5,022.32 | 3.70 | 0.5906 |
| 7,000 | 7.9719 | 4,375.00 | 3.64 | 0.6780 |
| 6,500 | 7.9719 | 3,772.32 | 3.58 | 0.7863 |
| 6,000 | 7.9719 | 3,214.29 | 3.51 | 0.9229 |
| 5,500 | 7.9719 | 2,700.89 | 3.43 | 1.0983 |
| 5,000 | 7.9719 | 2,232.14 | 3.35 | 1.3289 |
| 4,500 | 7.9719 | 1,808.04 | 3.26 | 1.6407 |
| 4,000 | 7.9719 | 1,428.57 | 3.15 | 2.0765 |
| 3,500 | 7.9719 | 1,093.75 | 3.04 | 2.7121 |
| 3,000 | 7.9719 | 803.57 | 2.91 | 3.6915 |
| 2,500 | 7.9719 | 558.04 | 2.75 | 5.3157 |
| 2,000 | 7.9719 | 357.14 | 2.55 | 8.3058 |
| 1,500 | 7.9719 | 200.89 | 2.30 | 14.7659 |
| 1,000 | 7.9719 | 89.29 | 1.95 | 33.2232 |

**[Table 5]**

| Void diameter (µm) | 0.3 or less | 0.3∼0.5 | 0.5∼1.0 | 1.0∼3.5 | 3.5 or more | SUM |
|---|---|---|---|---|---|---|
| cm 3 | 0.1295 | 0.0289 | 0.0926 | 0.2167 | 0.0400 | 0.5077 |
| % | 25.51 | 5.69 | 18.24 | 42.68 | 7.88 | 100.00 |

As a result of electron microscopic observation and measurement of void composition, it was found that continuous pores with a pore size of 0.2 to 5 pm (average pore size 3 µm) were formed on the surface of this microporous fired body.

### (b) Fibrous material

A container can be formed by wrapping a fibrous sheet such as paper, woven fabric, or non-woven fabric around a wire framework shaped like a flower pot.

A container can also be formed by compacting fibrous materials such as pulp and lint into a flower pot shape.

### (c) Resin material

A microporous container which has specific continuous pores can be formed using a resin material by a known method, similar to the above-mentioned fired material.

### (2) Culture conditions

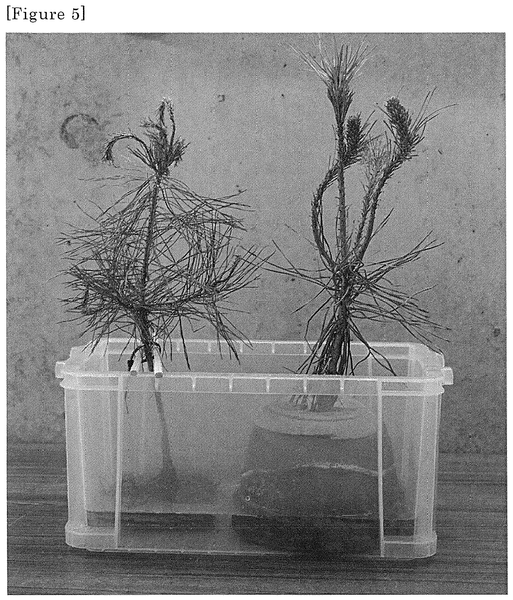

Tap water was put in a plastic case, and the fired body flat plate was put in the water in a stagnant state. The top surface of this flat plate was made to slightly protrude above the water. Seedlings of Pinus densiflora Sieb. et Zucc. (Japanese red pine) were put on the top of this flat plate (Figure 5, right). At this time, the bottom edge of the seedling is not submerged in water. A microporous body container (GS1 in Table 1) prepared in the present invention was set so as to surround the base of the seedling, and the seedling was cultured in an outdoor greenhouse for 10 months.

At the same time, Japanese red pine was cultured under the same culture conditions except that culture apparatus was not used and the upper part of the plant that had grown above a certain level was supported.

### (3) Results

Japanese red pine grew well when cultured using the culture apparatus according to the present invention. During the culturing period, the liquid-phase roots and vapor-phase roots of the plants grown using the microporous body container manufactured by the present invention did not come into contact with the inner wall of the apparatus. The removed plants were in good condition with no soil or algae attached, and were ready to be shipped as is.

On the other hand, vapor-phase roots were not formed in Japanese red pine grown without using the culture apparatus according to the present invention, and the plant withered after 3 months of culture (Figure 5, left).

### Example 2 Consideration of Material for Culture apparatus

The results of Example 1 showed that vapor-phase roots of plants are formed when a certain amount of moisture is constantly supplied to the roots above water. It was also suggested that keeping the upper part of the plant within a certain temperature range is necessary for vapor-phase root formation.

In order to further examine these environmental factors, plants were cultured using containers made of various materials.

### (1) Culture apparatus

### (a) Container according to the present invention

In the microporous body container (GS1 in Table 1) manufactured in the present invention, the entire cylinder part was evenly moistened during the culturing period, and no dew condensation was observed on the inner surface.

The growth status of Japanese red pine is as reported in Test Example 1. (b) Commercially available unglazed flower pot

Japanese red pine was cultured using a commercially available unglazed flower pot made by firing clay of unspecified origin at approximately 700°C. Unglazed flower pots have a porous surface. It is known that since their capillary force is insufficient, and they have high ventilation and drainage, the water inside the pot evaporates to dry it quickly. In fact, during the culturing period, the lower part of the cylinder part was moist, but the upper part was dry, and the whole part was not evenly moistened.

Japanese red pine grown in a commercially available unglazed flower pot did not form a vapor-phase root and withered.

### (c) Polypropylene shelter

Komatsuna was cultured using a tree shelter (Hexatube manufactured by PyhtoCulture Co., Ltd.) made of a polypropylene board. During the culturing period, dew condensation occurred on the inner surface to the extent that water droplets ran down.

Komatsuna grown in a tree shelter did not form a vapor-phase root and withered.

### (d) Paper container

A container made by compacting paper fibers was set in stagnant water and the wet state was observed. The entire container was evenly moistened, and no dew condensation was observed on the inner surface.

Therefore, it was suggested that containers made of paper are useful for the culture method according to the present invention.

### (e) Cloth container

A container made by wrapping cotton cloth around a wire framework shaped like a flower pot was set in stagnant water and the wet state was observed. The entire container was evenly moistened, and no dew condensation was observed on the inner surface.

Therefore, it was suggested that containers made of cloth container are useful for the culture method according to the present invention.

### (f) Results

It has been found that a container constructed with a structure showing capillary force is useful for the culture method of the present invention. However, it was shown that the vapor-phase roots and liquid-phase roots could not sufficiently elongated in the plant whole body, if the ventilation and drainage are too high, so that the temperature and humidity (especially humidity) inside the container cannot be maintained. By using the culture apparatus and culture method of the present invention, it was confirmed that the vapor-phase root and liquid-phase root, which could not be clearly observed in the soil aggregates structure of soil, grow in different parts. It is shown that if it is allowed that the vapor-phase root to absorb oxygen from the atmosphere and the liquid-phase root to absorb water and nutrition from the water, plants can be grown without using soil or complex water circulation facilities.

### Example 3

Various plants were grown using the various microporous body containers (GS1 to GS9 and GSH2 to GSH9 in Table 1) manufactured in the present invention.

The present invention targets all plants for culture and Tables 6 and 7 show culture examples whose growth status were actually confirmed.

**[Table 6]**

| Main Use | Family | Genus | Species |
|---|---|---|---|
| Grains | Poaceae | Oryza | O. sativa |
| | Poaceae | Zea | Z. mays |
| | Poaceae | Triticum | T. aestivum |
| | Fabaceae | Glycine | G. max |
| Crafts | Malvaceae | Gossypium | Gossypium spp. |
| | Malvaceae | Hibiscus | H. cannabinus |
| Recreational plants | Solanaceae | Nicotiana | N. tabacum |
| | Rubiaceae Theaceae | Coffea Camellia | Coffea spp. C. sinensis |
| Leafy vegetables | Asteraceae | Lactuca | L. sativa |
| | Apiaceae | Coriandrum | C. sativum (coriander) |
| | Brassicaceae | Brassica | B. rapa subsp. pekinensis |
| | Brassicaceae | Brassica | B. oleracea var. capitata |
| | Brassicaceae | Brassica | B. oleracea var. italica |
| | Lamiaceae | Ocimum | O. basilicum |
| | Zingiberaceae | Zingiber | Z. mioga |
| Root vegetables | Convolvulace ae | Ipomoea | I. batatas |
| | Solanaceae | Solanum | S. tuberosum |
| | Apiaceae | Daucus | D. carota subsp. sativus |
| | Araceae | Colocasia | C. esculenta |
| | Dioscoreaceae | Dioscorea | D. japonica |
| | Zingiberaceae | Zingiber | Z. officinale |
| | Amaryllidaceae | Allium | A. cepa |
| | Brassicaceae | Brassica | B. rapa var. rapa |

**[Table 7]**

| Main Use | Family | Genus | Species |
|---|---|---|---|
| Fruit vegetables | Cucurbitaceae | Cucumis | C. sativus |
| | Cucurbitaceae | Cucumis | C. melo |
| | Solanaceae | Solanum | S. melongena |
| | Solanaceae | Solanum | S. lycopersicum |
| | Solanaceae | Capsicum | C. annuum |
| | Fabaceae | Phaseolus | P. vulgaris (green beans) |
| | Rosaceae | Fragaria | Fragaria × ananassa |
| Trees, Fruit Trees | Malvaceae | Abelmoschus | A. esculentus |
| | Rutaceae | Citrus | C. unshiu |
| | Vitaceae | Vitis | Vitis spp. |
| Flowers Appreciation | Violaceae | Viola | Viola x wittrockiana |
| | Caryophyllaceae | Dianthus | Dianthus spp. |
| | Asteraceae | Cosmos | Cosmos spp. |
| Medicinal plants | Araliaceae | Panax | P. ginseng |
| | Rutaceae | Phellodendron | P. amurense |
| Trees | Ginkgoaceae | Ginkgo | G. biloba |
| | Rutaceae | Poncirus | P. trifoliata |
| | Rosaceae | Rosa | Rosa spp. |
| | Rosaceae | Cerasus | C. jamasakura |
| | Theaceae | Camellia | C. japonica |
| | Lauraceae | Cinnamomum | C. camphora |
| | Anacardiaceae | Toxicodendron | T. vernicifluum |
| Trees: Lumber | Cupressaceae | Chamaecyparis | C. obtusa |
| | Cupressaceae | Cryptomeria | C. japonica |
| | Pinaceae | Pinus | P. densiflora |

The development situation of the vapor-phase root and liquid-phase root of some of the above plants will be explained.

### (1) Turnip

Roots of a turnip seedling purchased in a pot were washed with water to remove soil.

The turnip seedling was put in a plastic tray filled with tap water and left stagnant. At this time, the bottom edge of the seedling was submerged in water. A microporous body container (GS1 in Table 1) manufactured in the present invention was set so as to surround the base of the seedling, and the seedling was cultured in an outdoor greenhouse until March 29, 2021.

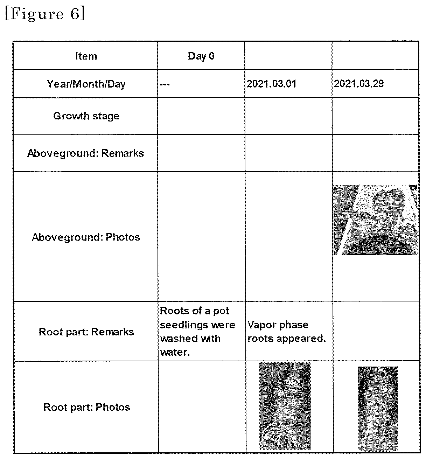

The timing of the start of culture is unknown, but a few weeks after the start of culture, dense white vapor-phase roots appeared above the water surface, and liquid-phase roots elongated underwater. The terrestrial part grew without dying (Figure 6).

Also, none of the roots were in contact with the inner wall of the container.

### (2) Potato

Seed potatoes were put in a plastic tray filled with tap water in a stagnant state. At this time, the lower part of the seed potato was submerged in water. A microporous body container (GS2+GSH2 in Table 1) manufactured in the present invention was set to surround the seed potato, and the seed potatoes were cultured in an outdoor greenhouse from February 22, 2021 to June 7, 2021.

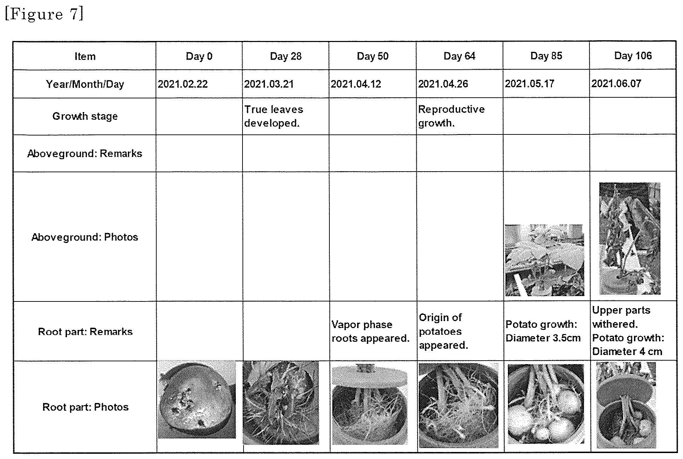

On the 8th day after the start of culture, germination and rooting were confirmed, and on the 50th day, the appearance of white vapor-phase roots above the water surface was confirmed. The liquid-phase roots elongated underwater. The terrestrial part grew without dying (Figure 7). Furthermore, on the 64th day, the tip of the subterranean stem began to enlarge, and on the 85th day, it grew into a fully enlarged potato (about 3.5 cm in diameter). On the 106th day, the potatoes grew to a diameter of about 4.5 cm, and the terrestrial parts did not wither until harvesting.

In addition, because the space inside the container was small, the elongated roots came into contact with the inner wall of the container, forming a root ball-like spiral, but there was no sign that the vapor-phase root was adsorbed to the inner wall of the container, and the vapor-phase root fully elongated.

### (3) Cabbage

Roots of a cabbage seedling purchased in a pot were washed with water to remove soil.

The cabbage seedling was put in a plastic tray filled with tap water and left stagnant. At this time, the bottom edge of the seedling was submerged in water. A microporous body container (GS1 in Table 1) manufactured in the present invention was set so as to surround the base of the seedling, and the seedling was cultured in an outdoor greenhouse until from August 23, 2021 to February 9, 2022.

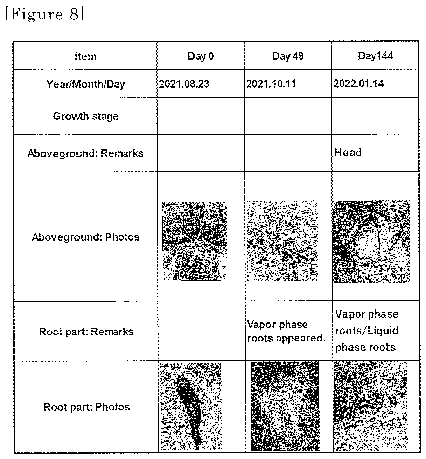

On the 46th day after the start of culture, the leaves began to curl in terrestrial part. On the 49th day, the appearance of white vapor-phase roots above the water surface was confirmed. The liquid-phase roots elongated underwater. The terrestrial part grew without dying (Figure 8). On the 144th day, a head formed in the terrestrial part, and the 170th day, it was harvested.

In addition, because the space inside the container was small, the elongated roots came into contact with the inner wall of the container, forming a root ball-like spiral, but there was no sign that the vapor-phase root was adsorbed to the inner wall of the container, and the vapor-phase root fully elongated.

### (4) Coffee tree A

Roots of a coffee tree whose terrestrial part grew to about 70 cm were washed with water to remove soil. The roots which had formed upon soil culture was dark brown.

The coffee tree was put in a plastic tray filled with tap water and left stagnant. At this time, the bottom edge of the tree was submerged in water. A microporous body container (GS1 in Table 1) manufactured in the present invention was set so as to surround the base of the tree and the tree was cultured in an outdoor greenhouse until from May 13, 2021 to December 2, 2021.

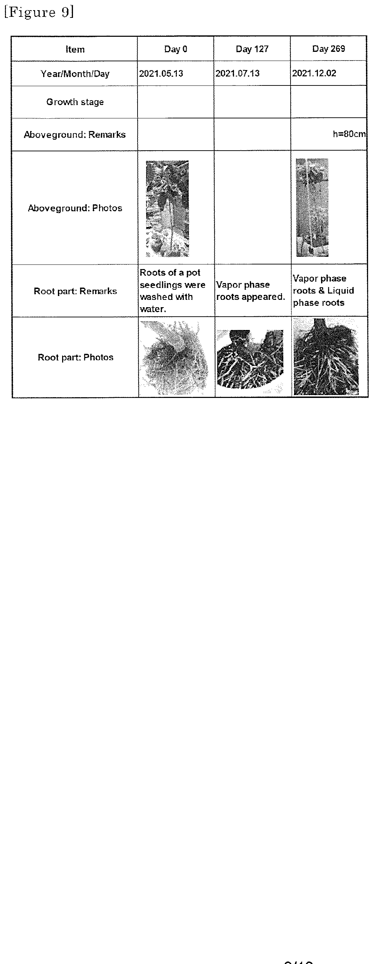

On the 127th day, the appearance of white vapor-phase roots above the water surface was confirmed. The liquid-phase roots elongated underwater. The terrestrial part grew without dying (Figure 9). On the 269th day, a head formed in the height of the terrestrial part became to 80 cm.

In addition, because the space inside the container was small, the elongated roots came into contact with the inner wall of the container, forming a root ball-like spiral, but there was no sign that the vapor-phase root was adsorbed to the inner wall of the container, and the vapor-phase root fully elongated.

### (5) Coffee tree B

Roots of a coffee tree purchased in a pot were washed with water to remove soil.

The coffee tree was put in a plastic tray filled with tap water and left stagnant. At this time, the bottom edge of the tree was submerged in water. A microporous body container (GS1 in Table 1) manufactured in the present invention was set so as to surround the base of the tree and the tree was cultured in an outdoor greenhouse until from April 2, 2021 to November 29, 2021.

On the 43th day, the appearance of white vapor-phase roots above the water surface was confirmed. The liquid-phase roots elongated underwater.

The elongated roots did not come into contact with the inner wall of the container.

### (6) Japanese red pine

Roots of a Japanese red pine tree whose terrestrial part grew to about 20 cm were washed with water to remove soil. The roots which had formed upon soil culture was dark brown.

The Japanese red pine tree was put in a plastic tray filled with tap water and left stagnant. At this time, the bottom edge of the tree was submerged in water. A microporous body container (GS1 in Table 1) manufactured in the present invention was set so as to surround the base of the tree and the tree was cultured in an outdoor greenhouse until from April 7, 2021 to January 19, 2022.

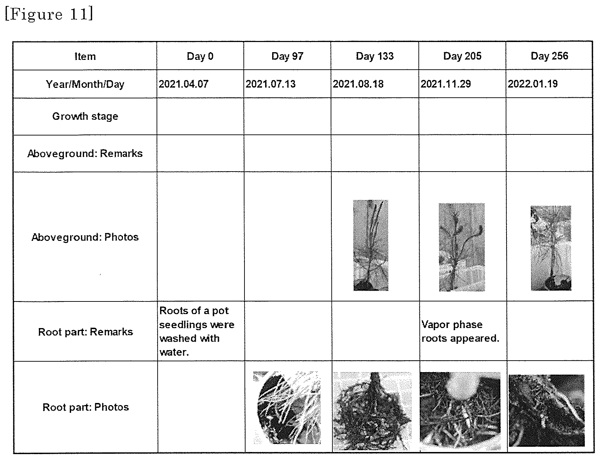

On the 205th day, the appearance of white vapor-phase roots above the water surface was confirmed. The liquid-phase roots elongated underwater. The terrestrial part grew without dying (Figure 11).

In addition, because the space inside the container was small, the elongated roots came into contact with the inner wall of the container, forming a root ball-like spiral, but there was no sign that the vapor-phase root was adsorbed to the inner wall of the container, and the vapor-phase root fully elongated.

### (7) Tea tree

Roots of a tea tree whose terrestrial part grew to about 30 cm were washed with water to remove soil. The roots which had formed upon soil culture was dark brown.

The tea tree was put in a plastic tray filled with tap water and left stagnant. At this time, the bottom edge of the tree was submerged in water. A microporous body container (GS7+GSH8 in Table 1) manufactured in the present invention was set so as to surround the base of the tree and the tree was cultured in an outdoor greenhouse until from November 16, 2021 to January 19, 2022.

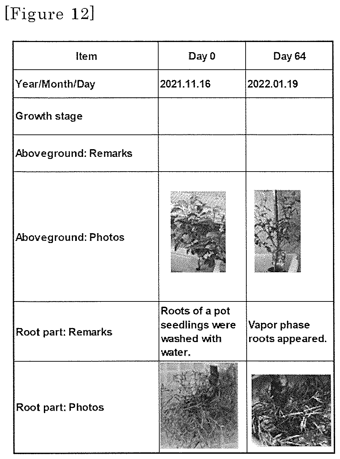

On the 64th day, the appearance of white vapor-phase roots above the water surface was confirmed. The liquid-phase roots elongated underwater. The terrestrial part grew without dying (Figure 12).

In addition, because the space inside the container was small, the elongated roots came into contact with the inner wall of the container, but there was no sign that the vapor-phase root was adsorbed to the inner wall of the container, and the vapor-phase root fully elongated.

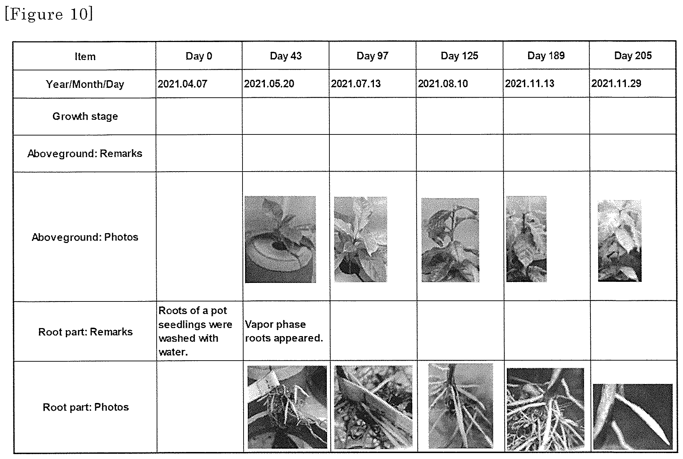

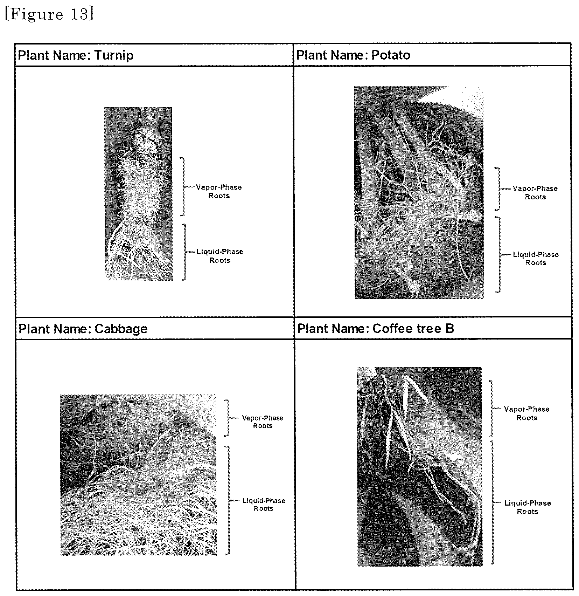

Table 8 summarizes the number of days after the start of culture when vapor-phase roots appeared for each of the above plants, and photographs showing changes in the state of the terrestrial part and underground part (root) are shown in Figures 6 to 12. Further, in order to make it easier to understand the difference between the vapor-phase root and the liquid-phase root, enlarged photographs of the roots are shown in Figure 13.

**[Table 8]**

| No. | Plant Name | Start Date of Culture | Appearance date of Vapor-phase Root | Number of days until appearance |
|---|---|---|---|---|
| 1 | Turnip | --- | 2021.03.01 | No Data |
| 2 | Potato | 2021.02.22 | 2021.04.12 | 50 |
| 3 | Cabbage | 2012.08.23 | 2021.10.11 | 49 |
| 4 | Coffee A | 2021.05.13 | 2021.07.13 | 127 |
| 5 | Coffee B | 2021.04.07 | 2021.05.20 | 43 |
| 6 | Red Pine | 2021.04.07 | 2021.11.29 | 205 |
| 7 | Tea Tree | 2021.11.16 | 2022.01.19 | 64 |

Figure 13 shows enlarged photographs of the vapor-phase root and liquid-phase root for turnip, potato, cabbage, and coffee tree B.

The appearance of the vapor-phase root differs depending on the type of plant, but all vapor-phase roots appeared above the water surface and grew without touching the inner wall of the container.

For example, the vapor-phase root of Coffee tree B had a plump white shape, with a lot of very thin lateral roots growing on its surface. Furthermore, vapor-phase roots whose tip submerged in water were observed in detail to reveal that the part submerged in water was smooth and had no lateral roots. It is unknown whether lateral roots do not appear in water, or even if they do appear, they fall off due to the influence of water.

As demonstrated in Example 1-3, it was confirmed that the culture apparatus and culture method according to the present invention is possible to grow vapor-phase roots above the water surface, and simultaneously liquid-phase roots in water for various plants, by using only stagnant water without complex water circulation facilities. That is, according to the present invention, it was possible to reproduce the environment of the aggregate structure of soil, which has been thought to affect the good growth of plants, without using soil.

In addition, since the present invention does not use soil, the roots of the plants are in a clean state with no soil or algae attached at the end of culture, and the plants can be shipped as they are without complicated cleaning work.

### [General discussion]

The "no soil-required plant culture" proposed by the present inventors can be applied to a wide range of plant varieties. Not only does it not require soil, it does not require a large land or flowing water, and it can be used to harvest almost all plants, including grains requiring large amount of roots, small woody plants (coffee, tea, etc.), and fruit trees. This enables culture in plant factories. The no soil-required plant culture technology dramatically increases the degree of freedom in plant culture, diversifies and industrializes plant culture methods, which have been limited to soil culture or hydroponics with equipment, to contribute to the supply of food and plant-based raw materials. Furthermore, it is possible to transfer plants and to adopt scientific approaches for identity, homogeneity, cleanliness, reproducibility, etc., which leads to new technological development. In addition, since this technology uses the "same manufacturing method" for the manufacture from research and development to commodification and commercialization, the time period until regional implementation, social implementation is achieved, can be shortened.

### [Industrial Applicability]

The plant factory created with the concept of "no soil-required plant culture" advocated by the present inventors can be operated by anyone, anywhere and anytime at low cost. Thus, as long as there is enough light for photosynthesis, not only in dry areas and disaster-stricken areas where an abundant supply of water cannot be expected, in space such as vehicles, freight cars, ships, and aircraft, and even in outer space, such as space stations and other planets.

### [Explanation of Symbols in the Drawings]

- 1: Culture apparatus
- 10: Container constructed with a capillary force structure
- 11: Cylinder part
- 111: Top edge
- 112: Open bottom edge
- 12: Closure part
- 121: Through hole
- 12a: Upper surface part
- 12b: Lid
- 20: Basin
- 30: Protective film
- 40: Sleeve
- 50: Mounting table
- 60: Support
- 70: Shelf

## Claims

1. Culture apparatus for a plant whole body, which comprises a container constructed with a structure showing capillary force; and a basin holding liquid.

2. The culture apparatus according to claim 1, wherein the container constructed with a structure showing capillary force consists of a cylinder part and a closure part, wherein a top edge of the cylinder part is closed with the closure part, wherein the closure part is an upper surface part integrated with the cylinder part or a lid removably formed from the top edge of the cylinder part, wherein a through hole is formed in the closure part, and wherein a bottom edge of the cylinder part has an open form or a closed form.

3. The culture apparatus according to claim 2, wherein the container with a microporous body is a fired body made of a non-metal inorganic solid material, and at least the cylinder part contains continuous pores that are voids, and the void rate of the entire fired body is 10 to 80% (vol/vol), the average pore size of the void is 3 µm or less, and the voids with a pore size of 3 pm or less account for 70% or more of the total voids in volume ratio.

4. A culture method for a plant whole body, which uses the culture apparatus according to any one of claims 1 to 3, the method comprises at least
a step of forming a spacial area capable of accommodating a root system of the plant whole body with the inner surface of the basin and the interior wall of the container by setting the container constructed with a structure showing capillary force within the basin holding liquid, so that its open or closed bottom edge is in contact with the inner a step of introducing surface of the basin;
a liquid into the basin before or after the step of forming a spacial area;
a step of growing root parts that absorb moisture and nutrition from the liquid phase in the liquid held within the basin; and
a step of growing root parts that absorb oxygen from the vapor phase in moisture and oxygen present inside the spacial area.

5. The culture method according to claim 4, wherein the liquid held in the basin is water or a nutrient solution containing nutrition required for growing the plant whole body to be cultured, and is stagnant water.

6. The culture method according to claim 5, wherein the nutrition required for the growth of the plant is an essential macroelement selected from the group consisting of nitrogen, phosphate, potassium, calcium, magnesium and sulfur; an essential trace element selected from the group consisting of iron, manganese, boron, zinc, molybdenum, copper, chlorine, nickel; or an useful element selected from the group consisting of silicon, sodium, cobalt.
